# EUROPEAN PATENT APPLICATION

(11) **EP 4 786 827 A1**
(43) Date of publication of application: **05.08.2026**
(21) Application number: 24872305.8
(22) Date of filing: 25.09.2024
(51) Int. Cl.: F16J 15/34, F16C 17/04

(54) **SLIDING COMPONENT**

(30) Priority: 28.09.2023 JP 2023168459; 18.04.2024 JP 2024067588
(71) Applicant: Eagle Industry Co., Ltd., Minato-ku Tokyo 105-8587 (JP)
(72) Inventor: UCHIYAMA Tomohiro, Tokyo 105-8587 (JP); UCHIDA Kenta, Tokyo 105-8587 (JP); MIYAKE Kuniaki, Tokyo 105-8587 (JP); IWA Toshiaki, Tokyo 105-8587 (JP); ITADANI Masatoshi, Tokyo 105-8587 (JP); MASUMI Yuki, Tokyo 105-8587 (JP); HISHIKAWA Takao, Tokyo 105-8587 (JP); IMAMOTO Yuya, Tokyo 105-8587 (JP)
(74) Representative: Patentquadrat Patentanwaltsgesellschaft mbH
(86) International application number: PCT/JP2024/034237
(87) International publication number: WO 2025/070519

(57) **Abstract**

To provide a sliding component having high lubricity during low-speed relative rotation.

A sliding component is disposed between a housing 4 and a shaft 1 extending through the housing 4, partitions a sealed fluid space S1 from a leakage space S2, and includes a pair of sliding surfaces 11, 21. One sliding surface 11 is provided with: dynamic pressure generating grooves 13 communicating with the sealed fluid space S1; a storage groove 12 disposed on a side of the leakage space S2 of the dynamic pressure generating grooves 13 and extending in a circumferential direction; first negative pressure generating grooves 14 disposed on the side of the leakage space S2 of the storage groove 12 and not communicating with the storage groove 12; and second negative pressure generating grooves 15 disposed on the side of the leakage space S2 of the storage groove 12 and communicating with the storage groove 12.

## Description

### {TECHNICAL FIELD}

The present invention relates to a sliding component, for example a sliding component having a pair of sliding surfaces that rotate relative to each other and are used for a shaft sealing device sealing a rotating shaft of a rotating machine in an automotive seal field, a general industrial machinery seal field, or another seal field or a bearing of a machine in an automotive bearing field, a general industrial machinery bearing field, or another bearing field.

### {BACKGROUND ART}

A shaft sealing device for preventing leakage of a sealed fluid, such as a mechanical seal, includes a pair of annular sliding components that rotate relative to each other and have sliding surfaces sliding against each other. In such a mechanical seal, reduction in energy lost due to sliding has been desired for environmental reasons, or the like in recent years.

For example, in a mechanical seal described in Patent Citation 1, the radially outer side of a rotating ring and a stationary ring is on the high-pressure fluid side, and the radially inner side thereof is on the low-pressure fluid side. A sliding surface of the stationary ring is provided with an annular pressure release groove and a plurality of dimples extending in a circumferential direction. The pressure release groove is in communication with the high-pressure fluid side. The dimples are provided on the low-pressure fluid side of the pressure release groove in the sliding surface. The pressure release groove and the dimples are partitioned in the radial direction by a land.

During the relative rotation of the rotating ring and the stationary ring, a negative pressure is generated at ends of the dimples on a relative rotation upstream side, high-pressure fluid between the sliding surfaces is drawn into the dimples, and leakage of the high-pressure fluid to the low-pressure fluid side is prevented. In addition, the high-pressure fluid drawn into the dimples moves to ends of the dimples on a relative rotation downstream side and is discharged into the pressure release groove across the land, maintaining the negative pressure generating capability of the dimples.

### {CITATION LIST}

### {Patent Literature}

Patent Citation 1: WO 2014-050920 A (Page 13, FIG. 15)

### {SUMMARY OF INVENTION}

### {Technical Problem}

In a mechanical seal such as that described in Patent Citation 1, the high-pressure fluid tending to leak to the low-pressure fluid side can be recovered by the dimples. However, during the low-speed relative rotation of the rotating ring and the stationary ring, liquid film formation by the Rayleigh step, which is a positive pressure generating mechanism, is less likely to occur, whereby the high-pressure fluid may be less likely to be supplied from the pressure release groove to the dimples, leading to poor lubrication.

The present invention has been made in view of such problems, and an object of the present invention is to provide a sliding component having high lubricity during low-speed relative rotation.

### {Solution to Problem}

In order to solve the foregoing problems, a sliding component according to the present invention is disposed between a housing and a shaft extending through the housing and partitions a sealed fluid space from a leakage space, the sliding component including a pair of sliding surfaces, wherein one of the sliding surfaces is provide with: at least one dynamic pressure generating groove communicating with the sealed fluid space; a storage groove disposed on a leakage space side of the dynamic pressure generating grooves and extending in a circumferential direction, at least one first negative pressure generating groove disposed on the leakage space side of the storage groove and not communicating with the storage groove; and at least one second negative pressure generating groove disposed on the leakage space side of the storage groove and communicating with the storage groove. According to the feature of the present invention, since the sealed fluid is introduced from the storage groove into the second negative pressure generating groove, the lubricity during low-speed relative rotation can be improved.

It may be preferable that a total volume of the second negative pressure generating grooves is smaller than a total volume of the first negative pressure generating grooves. According to this preferable configuration, during high-speed forward rotation, the first negative pressure generating grooves and the second negative pressure generating grooves exhibit the function of recovering the sealed fluid, and during reverse rotation, since the total volume of the second negative pressure generating grooves is smaller than the total volume of the first negative pressure generating grooves, the sealed fluid flowing toward the leakage side can be reduced.

It may be preferable that a plurality of the second negative pressure generating grooves are arranged in a circumferential direction, and a plurality of the first negative pressure generating grooves are disposed between adjacent two of the second negative pressure generating grooves. According to this preferable configuration, lubricity and fluid recovery capability can be enhanced in a well-balanced manner in the circumferential direction of the sliding surface.

It may be preferable that the first negative pressure generating groove and the second negative pressure generating groove extend in a radial direction, and one end of the second negative pressure generating groove on the leakage space side is disposed on a storage groove side of one end of the first negative pressure generating groove on the leakage space side. According to this preferable configuration, since the one end of the second negative pressure generating groove on the leakage space side can be spaced apart from the leakage space, the sealed fluid can be prevented from leaking from the second negative pressure generating groove into the leakage space during the reverse relative rotation.

It may be preferable that the first negative pressure generating groove is provided spaced apart from the second negative pressure generating groove on an extension line of the second negative pressure generating groove on the leakage space side. According to this preferable configuration, the sealed fluid recovered by the first negative pressure generating groove provided spaced apart on the extension line is likely to be recovered by the second negative pressure generating groove and returned to the storage groove.

It may be preferable that the second negative pressure generating groove overlaps in the circumferential direction with remaining one end of the first negative pressure generating groove on a sealed fluid space side. According to this preferable configuration, the fluid recovered by the first negative pressure generating groove is likely to be recovered by the second negative pressure generating groove and returned to the storage groove.

It may be preferable that the sliding component further includes a flow inhibiting mechanism configured to provide resistance to a sealed fluid flowing toward the leakage space side through the second negative pressure generating groove. According to this preferable configuration, since the flow inhibiting mechanism can inhibit the sealed fluid flowing from the second negative pressure generating groove to the leakage side, the sealed fluid flowing to the leakage side during the reverse rotation can be prevented.

It may be preferable that the flow inhibiting mechanism is a projection extending inclined toward a communication portion between the second negative pressure generating groove and the storage groove. According to this preferable configuration, the projection can allow the flow of the sealed fluid from the second negative pressure generating groove to the storage groove and restrict the flow of the sealed fluid from the storage groove to the second negative pressure generating groove.

It may be preferable that the flow inhibiting mechanism is a wall rising in a depth direction against a flow of the sealed fluid toward the leakage space side. According to this preferable configuration, the wall can allow the flow of the sealed fluid from the second negative pressure generating groove to the storage groove and restrict the flow of the sealed fluid from the storage groove to the second negative pressure generating groove.

It may be preferable that dimples are provided on the one of the sliding surfaces at least on the leakage space side of the first negative pressure generating groove and the second negative pressure generating groove. According to this preferable configuration, the sealed fluid stored in the dimples can ensure lubricity on the leakage space side of the first negative pressure generating groove and the second negative pressure generating groove, which are susceptible to poor lubrication.

It may be preferable that dimples are provided on remaining one of the sliding surfaces opposed to the one of the sliding surfaces, at least on the leakage space side of the first negative pressure generating groove and the second negative pressure generating groove. According to this preferable configuration, the sealed fluid stored in the dimples can ensure lubricity on the leakage space side of the first negative pressure generating groove and the second negative pressure generating groove, which are susceptible to poor lubrication.

### {BRIEF DESCRIPTION OF DRAWINGS}

FIG. 1 is a longitudinal sectional view illustrating an example of a mechanical seal as a sliding component according to a first embodiment of the present invention.
FIG. 2 is a view of a sliding surface of a stationary seal ring in the first embodiment when viewed in an axial direction.
FIG. 3 is an enlarged view of a main portion of the sliding surface of the stationary seal ring when viewed in the axial direction during forward rotation of a rotating seal ring in the first embodiment.
FIG. 4 is an enlarged view of a main portion of the sliding surface of the stationary seal ring during reverse rotation of the rotating seal ring in the first embodiment.
FIG. 5 is a sectional view taken along line A-A of FIG. 4.
FIG. 6 is an enlarged view of a main portion of a sliding surface of a stationary seal ring of a sliding component according to a second embodiment of the present invention when viewed in the axial direction.
FIG. 7A is an enlarged view of a main portion of a sliding surface of a stationary seal ring of a sliding component according to a third embodiment of the present invention when viewed in the axial direction, FIG. 7B is a schematic view illustrating a flow of a sealed fluid during the forward rotation, and FIG. 7C is a schematic view illustrating a flow of the sealed fluid during the reverse rotation.
FIG. 8A is an enlarged view of a main portion of a sliding surface of a stationary seal ring of a sliding component according to a fourth embodiment of the present invention when viewed in the axial direction, and FIG. 8B is an enlarged view of a main portion illustrating a modification of FIG. A.
FIG. 9A is an enlarged view of a main portion of a sliding surface of a stationary seal ring of a sliding component according to a fifth embodiment of the present invention when viewed in the axial direction, FIG. 9B is a sectional view taken along line B-B of FIG. 9A, and FIG. 9C is a sectional view illustrating a modification of FIG. 9B.
FIG. 10 is a view of a sliding surface of a rotating seal ring of a sliding component according to a sixth embodiment of the present invention when viewed in the axial direction.
FIG. 11 is a schematic view of the sliding surface of the stationary seal ring with a pair of sliding surfaces overlapped when viewed in the axial direction in the sixth embodiment.
FIG. 12 is a view of a sliding surface of a stationary seal ring of a sliding component according to a seventh embodiment of the present invention when viewed in the axial direction.
FIG. 13 is a view of a sliding surface of a rotating seal ring of a sliding component according to an eighth embodiment of the present invention when viewed in the axial direction.
FIG. 14 is a view illustrating a modification of the mechanical seal in the first embodiment of the present invention.

### {DESCRIPTION OF EMBODIMENTS}

Modes for implementing a sliding component according to the present invention will be described below based on embodiments.

### {First embodiment}

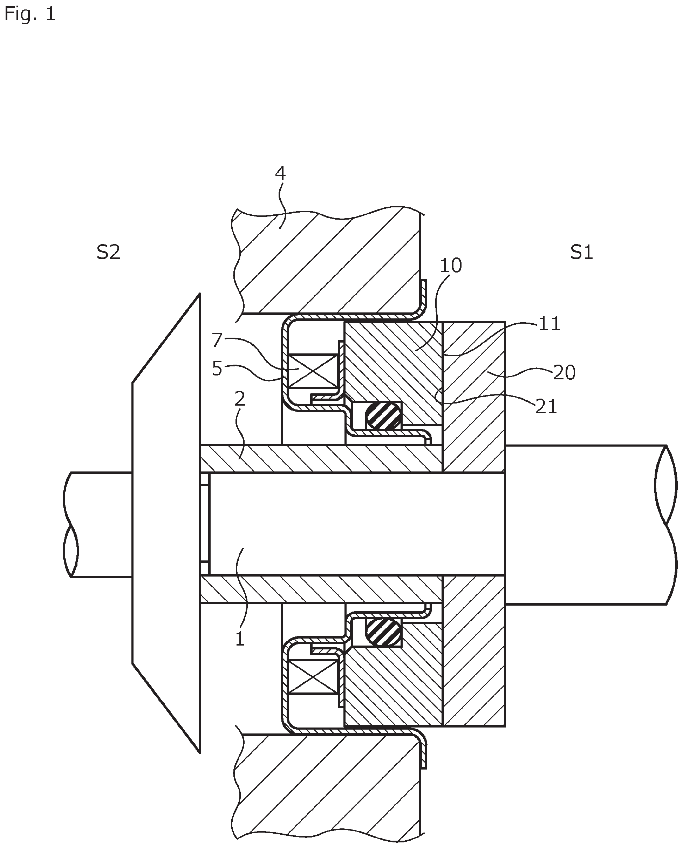

A sliding component according to a first embodiment will be described with reference to FIGS. 1 to 5. In the present embodiment, a mechanical seal is described as an example of the sliding component. In the mechanical seal of the present embodiment, a high-pressure sealed fluid such as oil exists in an outer space S1 serving as a sealed fluid space, and an inner space S2 serving as a leakage space is in communication with a low-pressure atmosphere. In addition, in the drawings, for convenience of explanation, dots may be provided on grooves and the like formed on a sliding surface.

A mechanical seal illustrated in FIG. 1 is an inside mechanical seal that seals a sealed fluid that tends to leak from a radially outer side to a radially inner side of a sliding surface.

The mechanical seal mainly includes a stationary seal ring 10 and a rotating seal ring 20. The stationary seal ring 10 has an annular shape and is provided in a non-rotatable state and movable state in an axial direction on a seal cover 5 fixed to a housing 4 of the equipment to be attached. The rotating seal ring 20 has an annular shape and is provided on a rotating shaft 1 via a sleeve 2 to be rotatable together with the rotating shaft 1.

The stationary seal ring 10 is biased in the axial direction by an elastic member 7. A sliding surface 11 of the stationary seal ring 10 and a sliding surface 21 of the rotating seal ring 20 are adapted to slide closely against each other. Incidentally, the sliding surface 21 of the rotating seal ring 20 is a flat surface which has no recesses such as grooves.

The stationary seal ring 10 and the rotating seal ring 20 are typically formed of SiC (as an example of hard material) or a combination of SiC and carbon (as an example of soft material); however, the present invention is not limited thereto, any sliding material can be applied insofar as it is used as a sliding material for a mechanical seal. Incidentally, SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

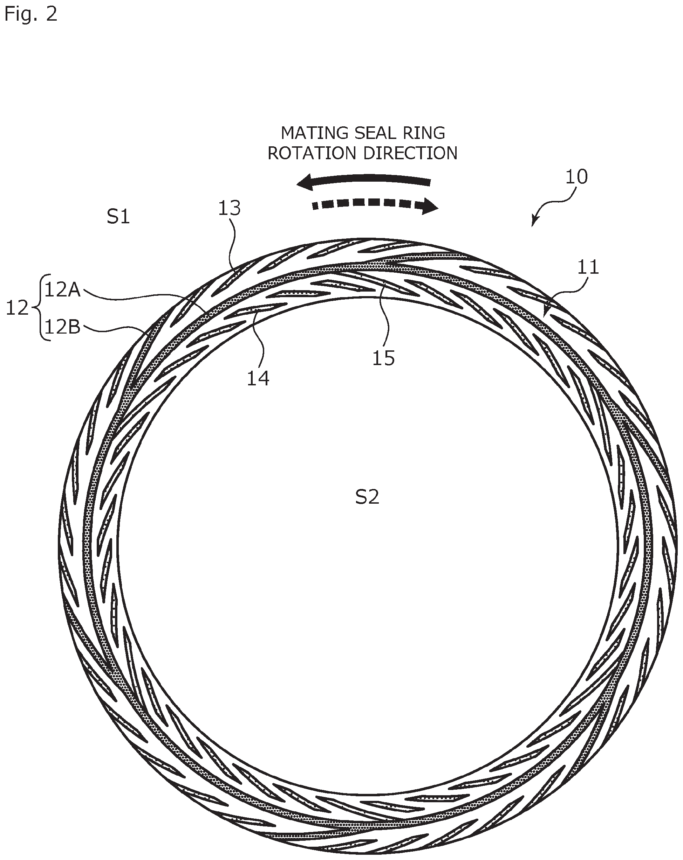

As illustrated in FIG. 2, the rotating seal ring 20 mainly slides relative to the stationary seal ring 10 counterclockwise as indicated by the solid arrow. In addition, the rotation direction may also be changed so that the rotating seal ring 20 slides relative to the stationary seal ring 10 clockwise as illustrated by the dashed arrow. Hereinafter, the description will be made based on the assumption that the direction indicated by the solid arrow is a forward rotation direction of the rotating seal ring 20 and the direction indicated by the dashed arrow is a reverse rotation direction of the rotating seal ring 20.

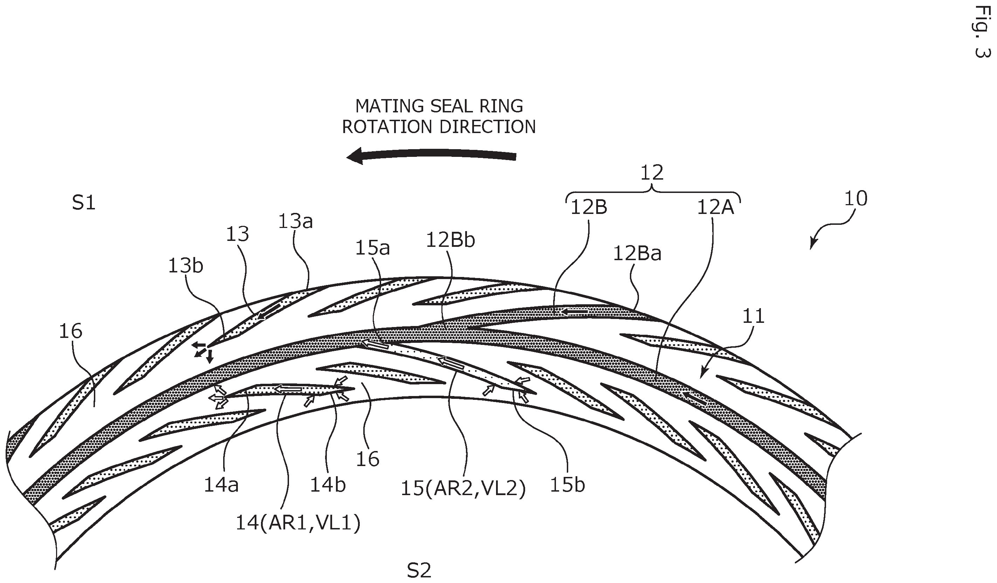

As illustrated in FIGS. 2 and 3, the sliding surface 11 of the stationary seal ring 10 is provided with a storage groove 12, dynamic pressure generating grooves 13, first negative pressure generating grooves 14, and second negative pressure generating grooves 15.

The storage groove 12 includes an annular groove portion 12A and a plurality of (six in the present embodiment) inlet/outlet groove portions 12B. The annular groove portion 12A is provided substantially concentrically with the sliding surface 11 at substantially the center of the sliding surface 11 in a radial direction.

The inlet/outlet groove portions 12B extend in an arc shape while being inclined in the reverse rotation direction from the annular groove portion 12A toward the radially outer side. Radially outer ends 12Ba of the inlet/outlet groove portions 12B are in communication with the outer space S1, and radially inner ends 12Bb are in communication with the annular groove portion 12A. The inlet/outlet groove portions 12B are equiangularly arranged in a circumferential direction. Incidentally, the inlet/outlet groove portions 12B are not limited to an arc shape, but may extend linearly or extend in the radial direction without being inclined in the circumferential direction. Further, the number of inlet/outlet groove portions 12B can be freely changed.

The annular groove portion 12A and the inlet/outlet groove portions 12B are formed to the same depth and are deeper than the dynamic pressure generating grooves 13, the first negative pressure generating grooves 14, and the second negative pressure generating grooves 15 described later. Incidentally, the annular groove portion 12A and the inlet/outlet groove portions 12B may be formed to different depths.

The dynamic pressure generating grooves 13 extend in an arc shape while being inclined in the forward rotation direction from the radially outer side toward the radially inner side. In other words, the dynamic pressure generating grooves 13 are so-called spiral grooves having radial and circumferential components.

Radially outer ends 13a of the dynamic pressure generating grooves 13 are in communication with the outer space S1, and radially inner ends 13b thereof are closed. Namely, a land 16 are provided between the radially inner ends 13b of the dynamic pressure generating grooves 13 and the annular groove portion 12A and on opposite sides of the dynamic pressure generating grooves 13 in the circumferential direction.

The dynamic pressure generating grooves 13 extend substantially parallel to the inlet/outlet groove portions 12B. Incidentally, the dynamic pressure generating grooves 13 are not limited to an arc shape, but may extend linearly. Further, the dynamic pressure generating grooves 13 are not limited to spiral grooves, but may be Rayleigh steps, dimples, or the like.

A plurality of (five in the present embodiment) dynamic pressure generating grooves 13 are equiangularly arranged between the inlet/outlet groove portions 12B adjacent in the circumferential direction. Incidentally, the number of dynamic pressure generating grooves 13 can be freely changed.

In addition, the dynamic pressure generating grooves 13 are formed shallower than the storage groove 12.

The plurality of first negative pressure generating grooves 14 and the plurality of second negative pressure generating grooves 15 are provided on the radially inner side of the annular groove portion 12A.

The first negative pressure generating grooves 14 extend in an arc shape while being inclined in the reverse rotation direction from the radially outer side to the radially inner side. In other words, the first negative pressure generating grooves 14 are so-called spiral grooves having radial and circumferential components.

Radially outer ends 14a and radially inner ends 14b of the first negative pressure generating grooves 14 are closed ends. Namely, the first negative pressure generating grooves 14 are surrounded by the land 16 and are not in communication with the annular groove portion 12A and the inner space S2.

The second negative pressure generating grooves 15 extend in an arc shape while being inclined in the reverse rotation direction from the radially outer side toward the radially inner side, and are substantially parallel to the first negative pressure generating grooves 14. In other words, the second negative pressure generating grooves 15 are so-called spiral grooves having radial and circumferential components. The second negative pressure generating grooves 15 are longer in an extension direction than the first negative pressure generating grooves 14. Portions of the second negative pressure generating grooves 15 overlap in the circumferential direction with the radially outer ends 14a, which serve as the ends of the first negative pressure generating grooves 14 on the sealed fluid space side.

Radially outer ends 15a of the second negative pressure generating grooves 15 are in communication with the annular groove portion 12A, and radially inner ends 15b thereof are closed ends. Namely, the land 16 is provided between the radially inner ends 15b of the second negative pressure generating grooves 15 and the inner space S2 and on opposite sides of the second negative pressure generating grooves 15 in the circumferential direction.

The plurality of (six in the present embodiment) second negative pressure generating grooves 15 are equiangularly arranged in the circumferential direction. The radially outer ends 15a of the second negative pressure generating grooves 15 are disposed in the vicinity of the downstream side in the forward rotation direction of the radially inner ends 12Bb of the inlet/outlet groove portions 12B. Incidentally, the number of second negative pressure generating grooves 15 can be freely changed.

The plurality of (five in the present embodiment) first negative pressure generating grooves 14 are equiangularly arranged between the second negative pressure generating grooves 15 adjacent in the circumferential direction. Incidentally, the number of first negative pressure generating grooves 14 can be freely changed.

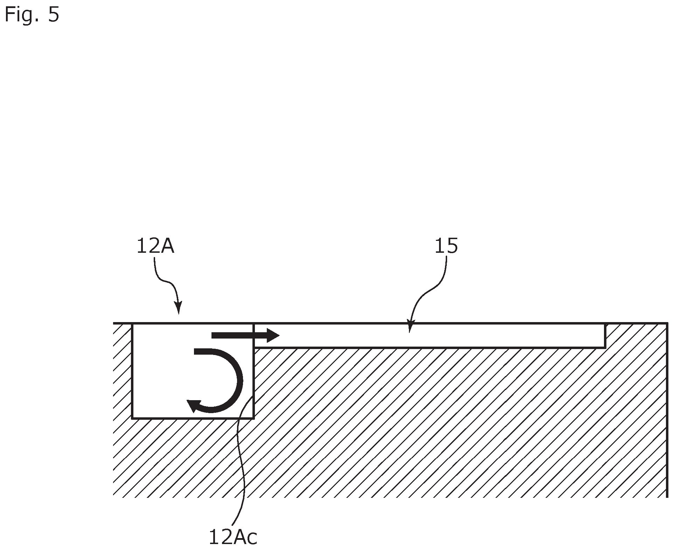

The first negative pressure generating grooves 14 and the second negative pressure generating grooves 15 are both formed to the same depth as the dynamic pressure generating grooves 13. Namely, the first negative pressure generating grooves 14 and the second negative pressure generating grooves 15 are formed shallower than the storage groove 12 (see FIG. 5). Incidentally, the first negative pressure generating grooves 14 and the second negative pressure generating grooves 15 may have a different depth from the dynamic pressure generating grooves 13. Further, the first negative pressure generating grooves 14 and the second negative pressure generating grooves 15 may have different depths.

The second negative pressure generating grooves 15 are longer in the extension direction than the first negative pressure generating grooves 14, but are fewer in number than the first negative pressure generating grooves 14, and a total area AR2 of the second negative pressure generating grooves 15 on the sliding surface 11 when viewed in the axial direction is smaller than a total area AR1 of the first negative pressure generating grooves 14 on the sliding surface 11 (AR2 < AR1).

In addition, since the first negative pressure generating grooves 14 and the second negative pressure generating grooves 15 have the same depth, a total volume VL2 of the second negative pressure generating grooves 15 is smaller than a total volume VL1 of the first negative pressure generating grooves 14 (VL2 < VL1).

Then, a state in which the rotating seal ring 20 rotates relative to the stationary seal ring 10 in a forward direction will be described.

As illustrated in FIG. 3, when the rotating seal ring 20 rotates relative to the stationary seal ring 10 in the forward direction, the fluid moves within the grooves in accordance with the direction of rotation of the rotating seal ring 20.

Specifically, during the low-speed forward rotation of the rotating seal ring 20 and the stationary seal ring 10, the sealed fluid in the outer space S1 is introduced from radially outer ends 12Ba of the inlet/outlet groove portions 12B and moves toward the annular groove portion 12A, and the sealed fluid within the annular groove portion 12A moves in the forward rotation direction. Accordingly, the sealed fluid flows out from the inlet/outlet groove portions 12B and the annular groove portion 12A into a space between the sliding surfaces 11, 21.

In addition, in the dynamic pressure generating grooves 13, the sealed fluid in the outer space S1 is introduced from the radially outer ends 13a and moves toward the radially inner ends 13b. Accordingly, the sealed fluid flows out from the dynamic pressure generating grooves 13 into the space between the sliding surfaces 11, 21. Incidentally, during the low-speed forward rotation, almost no dynamic pressure is generated at the radially inner ends 13b. Accordingly, the lubricity in the area of the sliding surface 11 on the radially outer side from the annular groove portion 12A is improved.

In addition, in the first negative pressure generating grooves 14, the fluid within the first negative pressure generating grooves 14 moves from the radially inner ends 14b toward the radially outer ends 14a and flows out into the space between the sliding surfaces 11, 21. In addition, the sealed fluid between the surrounding sliding surfaces 11, 21 is introduced into the first negative pressure generating grooves 14. Incidentally, the sealed fluid and the air in the inner space S2 may be mixed within the first negative pressure generating grooves 14. Further, during the low-speed forward rotation, almost no dynamic pressure is generated at the first negative pressure generating grooves 14.

In addition, in the second negative pressure generating grooves 15, a portion of the sealed fluid flows out into the space between the sliding surfaces 11, 21. In addition, the sealed fluid between the surrounding sliding surfaces 11, 21 is introduced into the second negative pressure generating grooves 15. Further, during the low-speed forward rotation, almost no dynamic pressure is generated at the second negative pressure generating grooves 15. Specifically, during lower rotation within the low-speed rotation range, the shear force acting between the sliding surfaces 11, 21 is small, and the sealed fluid mainly moves in the circumferential direction from the second negative pressure generating grooves 15 and flows out into the space between the sliding surfaces 11, 21, whereby the sealed fluid is supplied from the annular groove portion 12A to the second negative pressure generating grooves 15. In addition, during higher rotation within the low-speed rotation range, the shear force acting between the sliding surfaces 11, 21 increases, and the sealed fluid within the second negative pressure generating grooves 15 moves from the radially inner ends 15b toward the radially outer ends 15a, with a portion being discharged into the annular groove portion 12A (as indicated by the white arrows in FIG. 3).

Since the second negative pressure generating grooves 15 are in communication with the annular groove portion 12A, the lubricity in the area of the sliding surface 11 on the radially inner side of the annular groove portion 12A is improved during low-speed relative rotation.

As described above, since the second negative pressure generating grooves 15 are equiangularly arranged in the circumferential direction, and the first negative pressure generating grooves 14 are equiangularly arranged between the adjacent second negative pressure generating grooves, lubricity can be enhanced in a well-balanced manner in the circumferential direction of the sliding surface 11.

During the high-speed forward rotation of the rotating seal ring 20 and the stationary seal ring 10, positive pressure is generated at the radially inner ends 13b of the dynamic pressure generating grooves 13, and positive pressure is also generated at the radially outer ends 14a of the first negative pressure generating grooves 14. Accordingly, the sliding surfaces 11, 21 are spaced apart from each other, and a greater amount of the sealed fluid is introduced from the outer space S1, improving slidability.

In addition, relative negative pressure is generated at the radially inner ends 14b of the first negative pressure generating grooves 14 and at the radially inner ends 15b of the second negative pressure generating grooves 15. Accordingly, the sealed fluid tending to leak toward the inner space S2 beyond the annular groove portion 12A is recovered by the first negative pressure generating grooves 14 and the second negative pressure generating grooves 15. The sealed fluid recovered by the first negative pressure generating grooves 14 is returned to the annular groove portion 12A beyond the land 16, and the sealed fluid recovered by the second negative pressure generating grooves 15 is returned to the annular groove portion 12A through the radially outer ends 15a, thereby preventing leakage of the sealed fluid.

As described above, since the second negative pressure generating grooves 15 are equiangularly arranged in the circumferential direction, and the first negative pressure generating grooves 14 are equiangularly arranged between the adjacent second negative pressure generating grooves, the fluid recovery capability can be increased in a well-balanced manner in the circumferential direction of the sliding surface 11.

In addition, portions of the radially inner ends 15b of the second negative pressure generating grooves 15 overlap in the circumferential direction with the radially outer ends 14a of the first negative pressure generating grooves 14. Accordingly, the sealed fluid recovered by the first negative pressure generating grooves 14 is likely to be guided into the second negative pressure generating grooves 15 and returned to the storage groove 12 via the second negative pressure generating grooves 15.

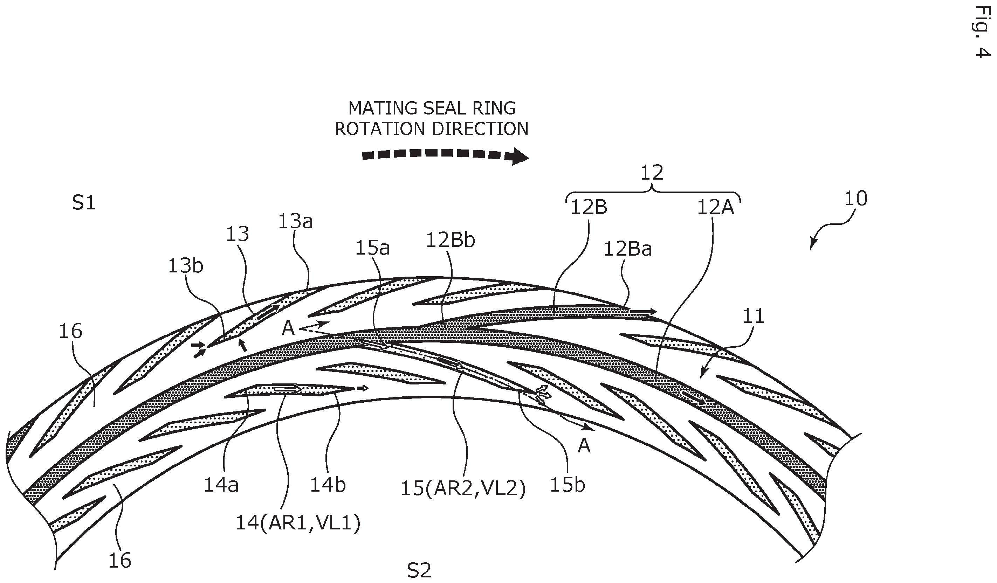

As illustrated in FIG. 4, during the reverse rotation of the rotating seal ring 20 and the stationary seal ring 10, the sealed fluid within the annular groove portion 12A is discharged from the radially outer ends 12Ba of the inlet/outlet groove portions 12B into the outer space S1.

In the dynamic pressure generating grooves 13, the sealed fluid moves from the radially inner ends 13b toward the radially outer ends 13a and is discharged into the outer space S1. At this time, the surrounding sealed fluid is also recovered. Accordingly, the sealed fluid is prevented from being introduced from the outer space S1 into the space between the sliding surfaces 11, 21, and since a large amount of sealed fluid is stored in the storage groove 12, poor lubricity is prevented.

In the first negative pressure generating grooves 14, the fluid within the first negative pressure generating grooves 14 moves from the radially outer ends 14a toward the radially inner ends 14b. However, since the first negative pressure generating grooves 14 are not in communication with the annular groove portion 12A and the amount of movement is small, the sealed fluid is less likely to leak from the radially inner ends 14b toward the inner space S2.

Since the second negative pressure generating grooves 15 are in communication with the annular groove portion 12A, the sealed fluid is supplied from the annular groove portion 12A to the radially outer ends 15a and is discharged from the radially inner ends 15b toward the inner space S2. Meanwhile, as described above, the total area AR2 of the second negative pressure generating grooves 15 on the sliding surface 11 is smaller than the total area AR1 of the first negative pressure generating grooves 14 on the sliding surface 11, and the total volume VL2 of the second negative pressure generating grooves 15 is smaller than the total volume VL1 of the first negative pressure generating grooves 14.

Accordingly, during the high-speed forward rotation, the first negative pressure generating grooves 14 and the second negative pressure generating grooves 15 exhibit a recovery function of the sealed fluid, and during the reverse rotation, the amount of sealed fluid flowing toward the inner space S2 can be reduced, thereby, the sealed fluid is less likely to leak.

As illustrated in FIG. 5, the annular groove portion 12A is formed deeper than the second negative pressure generating grooves 15, and a side wall 12Ac on the side of the second negative pressure generating grooves 15 rises in a depth direction.

The side wall 12Ac is configured to provide resistance to the majority of the sealed fluid that tends to flow from the annular groove portion 12A toward the second negative pressure generating grooves 15 during the reverse rotation. Namely, the side wall 12Ac functions as a flow inhibiting mechanism in the present embodiment. On the other hand, during the forward rotation, the flow of the sealed fluid from the second negative pressure generating grooves 15 to the annular groove portion 12A is permitted.

Accordingly, since the flow of the sealed fluid from the second negative pressure generating grooves 15 to the annular groove portion 12A is permitted, while the flow of the sealed fluid from the annular groove portion 12A to the second negative pressure generating grooves 15 is restricted, the fluid recovery capability during the forward rotation can be enhanced, while leakage of the sealed fluid during the reverse rotation can be reduced.

### {Second embodiment}

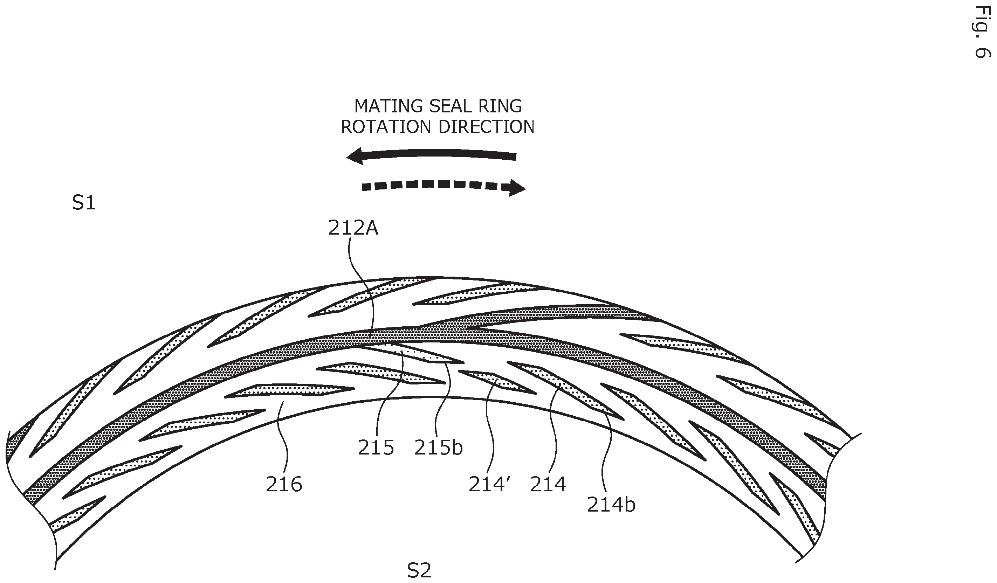

Next, a sliding component according to a second embodiment will be described with reference to FIG. 6. Incidentally, the description of configurations that are the same as and overlap with the configurations of the first embodiment will be omitted.

As illustrated in FIG. 6, second negative pressure generating grooves 215 of the second embodiment have a shorter length in the extension direction than the second negative pressure generating grooves 15 of the first embodiment. In other words, radially inner ends 215b of the second negative pressure generating grooves 215 are disposed on the radially outer side of radially inner ends 214b of first negative pressure generating grooves 214.

Accordingly, the radially inner ends 215b of the second negative pressure generating grooves 215 can be spaced apart from the inner space S2 in the radial direction, so that the sealed fluid is less likely to leak from the radially inner ends 215b into the inner space S2 during the reverse rotation.

In addition, since the radially inner ends 215b of the second negative pressure generating grooves 215 are disposed on the radially outer side of the radially inner ends 214b of the first negative pressure generating grooves 214, in other words, the second negative pressure generating grooves 215 of the second embodiment are shorter and have a smaller volume than the second negative pressure generating grooves 15 of the first embodiment, the flow of the sealed fluid into the second negative pressure generating grooves 215 is reduced, and dynamic pressure is less likely to be generated, preventing floating of the sliding surfaces and preventing leakage.

In addition, on the radially inner side in the extending direction of the radially inner ends 215b of the second negative pressure generating grooves 215, grooves 214' serving as first negative pressure generating grooves with their surroundings closed by a land 216 are provided. The grooves 214' function in the same manner as the first negative pressure generating grooves 214. Accordingly, during the forward rotation, the sealed fluid recovered by the grooves 214', which is provided spaced apart from the second negative pressure generating grooves 215 on the extension line thereof, is likely to be recovered by the second negative pressure generating grooves 215 and returned to the annular groove portions 212A.

### {Third embodiment}

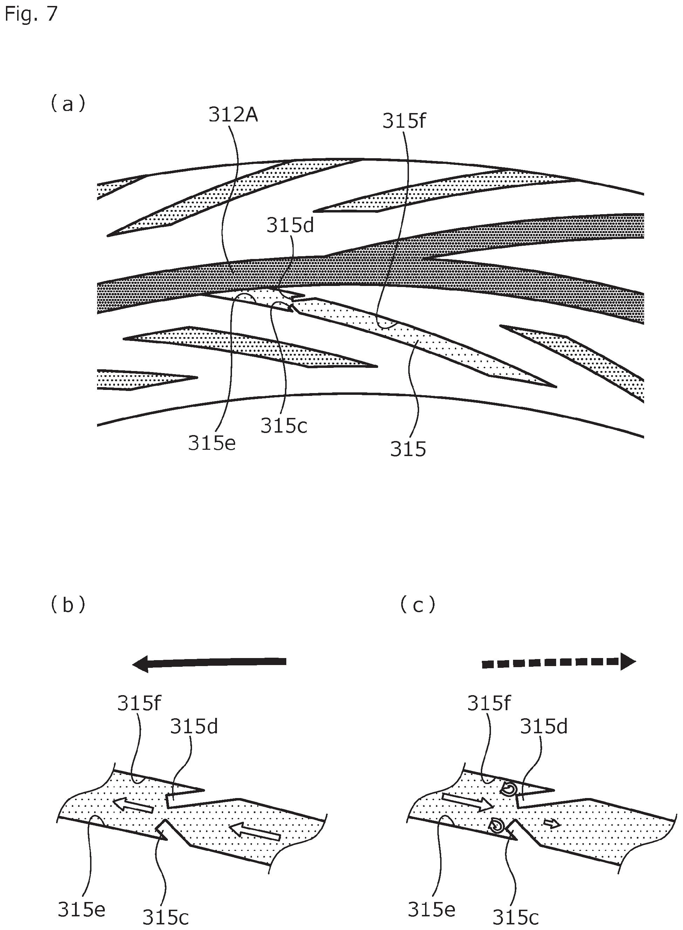

Next, a sliding component according to a third embodiment will be described with reference to FIG. 7. Incidentally, the description of configurations that are the same as and overlap with the configurations of the first embodiment will be omitted.

As illustrated in FIG. 7A, second negative pressure generating grooves 315 of the third embodiment are provided with projections 315c, 315d serving as a flow inhibiting mechanism at positions closer to the side of an annular groove portion 312A, the projections being opposed to each other on opposite sides in a width direction.

The projections 315c extend inward in the width direction from side walls 315e of the second negative pressure generating grooves 315 toward the annular groove portion 312A. The projections 315d extend inward in the width direction from side walls 315f of the second negative pressure generating grooves 315 toward the annular groove portion 312A. The tips of the projections 315c, 315d are spaced apart from each other in the width direction. In addition, the side walls of the projections 315c, 315d are continuous with the bottom surfaces of the second negative pressure generating grooves 315. In addition, the projections 315c, 315d are on the same plane as the land 16, but they may be recessed relative to the land 16.

As illustrated in FIG. 7B, during the forward rotation, the sealed fluid flows from the radially inner side toward the radially outer side of the second negative pressure generating grooves 315, and passes between the projections 315c, 315d to flow toward the annular groove portion 312A. At this time, the sealed fluid smoothly flows along the projections 315c, 315d while being guided toward the annular groove portion 312A.

As illustrated in FIG. 7C, during the reverse rotation, the sealed fluid flows from the radially outer side toward the radially inner side of the second negative pressure generating grooves 315. At this time, the sealed fluid is subjected to resistance by the projections 315c, 315d and stagnates between the projections 315c, 315d and the side walls 315e, 315f, whereby the flow rate of the sealed fluid flowing from the annular groove portion 312A toward the radially inner ends 315b of the second negative pressure generating grooves 315 is reduced. Since the amount of the sealed fluid introduced is reduced, dynamic pressure is less likely to be generated, consequently preventing floating of the sliding surfaces and preventing leakage.

Thus, during the forward rotation, the flow of the sealed fluid from the second negative pressure generating grooves 315 toward the annular groove portion 312A is permitted, so that the fluid recovery capability of the second negative pressure generating grooves 315 is enhanced. During the reverse rotation, the flow of the sealed fluid from the annular groove portion 312A toward the radially inner ends 315b of the second negative pressure generating grooves 315 is restricted, whereby leakage into the inner space S2 can be efficiently prevented.

Incidentally, in the third embodiment, a mode in which the projections 315c, 315d are provided opposed to each other on opposite sides of the second negative pressure generating grooves 315 has been provided as an example; however, the projections may be disposed with an offset in the extension direction of the second negative pressure generating grooves. In addition, at least one projection may be provided.

In addition, in the third embodiment, a mode in which the projections 315c, 315d extend linearly toward the annular groove portion 312A has been provided as an example; however, the present invention is not limited thereto. For example, the projections may have a substantially L shape with one portion extending in a direction intersecting the extension direction of the second negative pressure generating grooves, and another portion extending from the intersecting portion toward the annular groove portion.

### {Fourth embodiment}

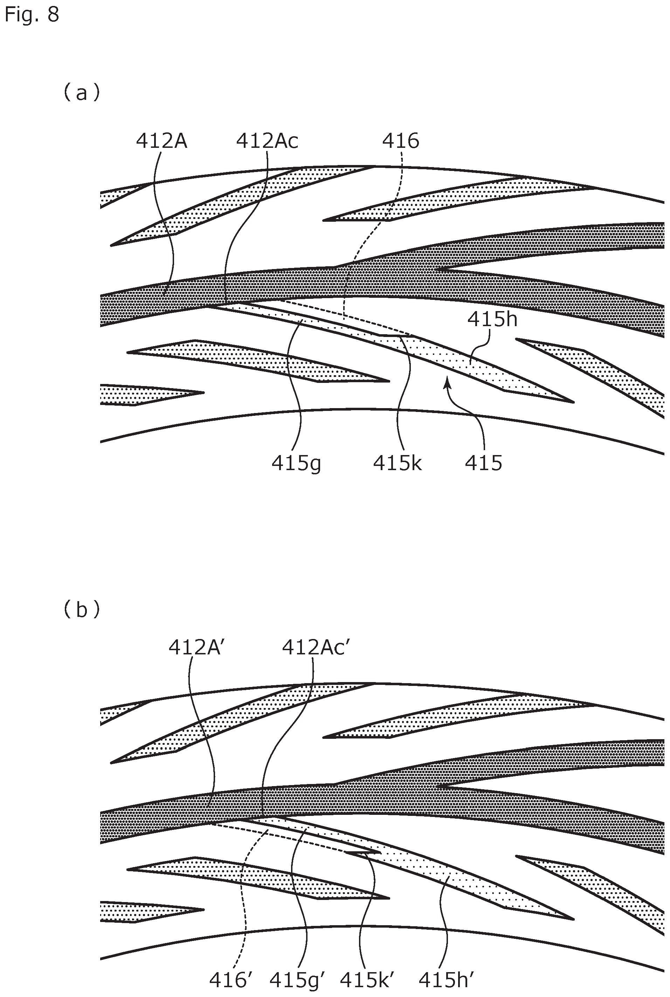

Next, a sliding component according to a fourth embodiment will be described with reference to FIG. 8. Incidentally, the description of configurations that are the same as and overlap with the configurations of the first embodiment will be omitted.

As illustrated in FIG. 8A, second negative pressure generating grooves 415 of the fourth embodiment are provided with throttles 415g. The throttles 415g have a smaller flow passage cross-sectional area than other portions 415h on the radially inner side of the throttles 415g of the second negative pressure generating grooves 415. The other portions 415h are provided on the radially inner side of the throttles 415g to protrude on the upstream side in the forward rotation direction. In other words, a land 416 on the upstream side in the forward rotation direction of the throttles 415g and a side wall 412Ac of the annular groove portion 412A function as a flow inhibiting mechanism.

Accordingly, during the low-speed rotation, lubricity can be enhanced by the sealed fluid within the second negative pressure generating grooves 415 that communicate with the annular groove portion 412A. During the reverse rotation, the flow of the sealed fluid from the annular groove portion 412A to the other portions 415h is restricted by the land 416, whereby dynamic pressure is less likely to be generated. Consequently, floating between the sliding surfaces can be prevented, preventing leakage into the inner space S2.

Incidentally, in the fourth embodiment, the other portions 415h are provided on the radially inner side of the throttles 415g to protrude on the upstream side in the forward rotation direction. However, as illustrated in FIG. 8B, other portions 415h' may be provided on the radially inner side of throttles 415g' to protrude on the downstream side in the forward rotation direction. In other words, a land 416' may be provided on the downstream side in the forward rotation direction of the throttles 415g'. In the present mode, the land 416' on the downstream side in the forward rotation direction of the throttles 415g' and a side wall 412Ac' of the annular groove portion 412A' function as a flow inhibiting mechanism.

Incidentally, when the modes in FIGS. 8A and 8B are compared, the mode in FIG. 8A is preferable. Specifically, in the mode in FIG. 8A, side walls 415k of the other portions 415h extending in the circumferential direction extend on the upstream side in the forward rotation direction from the radially inner ends of the throttles 415g. In other words, the throttles 415g are disposed in the forward rotation direction relative to the side walls 415k. Therefore, during the forward rotation, the sealed fluid within the other portions 415h are likely to flow along the side walls 415k in the forward rotation direction, thereby allowing the sealed fluid to be smoothly introduced into the throttles 415g.

In contrast, in the mode in FIG. 8B, side walls 415k' of other portions 415h' extend on the downstream side in the forward rotation direction from the radially inner ends of throttles 415g'. In other words, the throttles 415g' are disposed in the reverse rotation direction relative to the side walls 415k'. Accordingly, during the forward rotation, the sealed fluid within the other portion 415h' moves in a direction away from the throttles 415g', so that it tends to stagnate in the vicinity of the side walls 415k', and it is less likely to be introduced into the throttles 415g' compared to the mode in FIG. 8A.

### {Fifth embodiment}

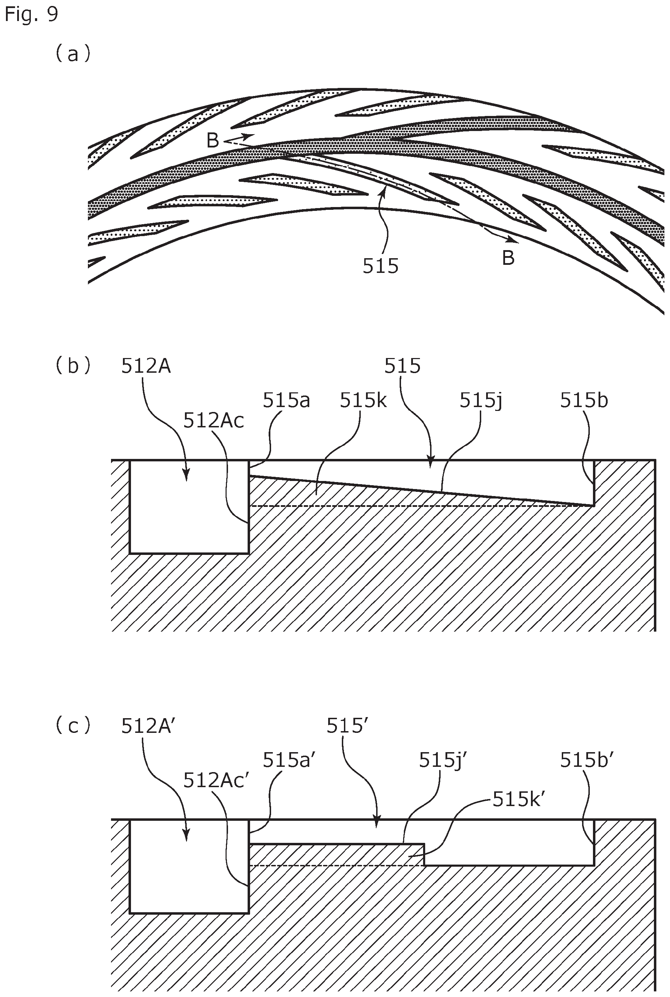

Next, a sliding component according to a fifth embodiment will be described with reference to FIG. 9. Incidentally, the description of configurations that are the same as and overlap with the configurations of the first embodiment will be omitted.

As illustrated in FIGS. 9A and 9B, second negative pressure generating grooves 515 of the fifth embodiment have bottom surfaces 515j serving as inclined surfaces whose depths are reduced from radially inner ends 515b toward radially outer ends 515a. Incidentally, the deepest portions of the second negative pressure generating grooves 515 in FIG. 9B have the same depth as the second negative pressure generating grooves 15 of the first embodiment.

During the reverse rotation, a side wall 512Ac of an annular groove portion 512A functions as a flow inhibiting mechanism, and the flow passage cross-sectional area of the vicinity of radially outer ends 515a is further reduced by portions 515k of the second negative pressure generating grooves 515, which are shallower than those of the first embodiment. Therefore, the sealed fluid within the annular groove portion 512A is less likely to flow into the second negative pressure generating grooves 515. Accordingly, dynamic pressure is less likely to be generated, consequently preventing floating between the sliding surfaces and preventing leakage.

In addition, as illustrated in FIG. 9C, bottom surfaces 515j' of second negative pressure generating grooves 515' may have a stepped shape so that they are shallower from radially inner ends 515b' toward radially outer ends 515a'. In this case, a side wall 512Ac' of an annular groove portion 512A' functions as a flow inhibiting mechanism, and the flow passage cross-sectional area of the vicinity of radially outer ends 515a' is further reduced by portions 515k' of the second negative pressure generating grooves 515', which are shallower than those of the first embodiment. Therefore, the sealed fluid in the annular groove portion 512A' is less likely to flow into the second negative pressure generating grooves 515'. Accordingly, dynamic pressure is less likely to be generated, consequently preventing floating between the sliding surfaces and preventing leakage.

### {Sixth embodiment}

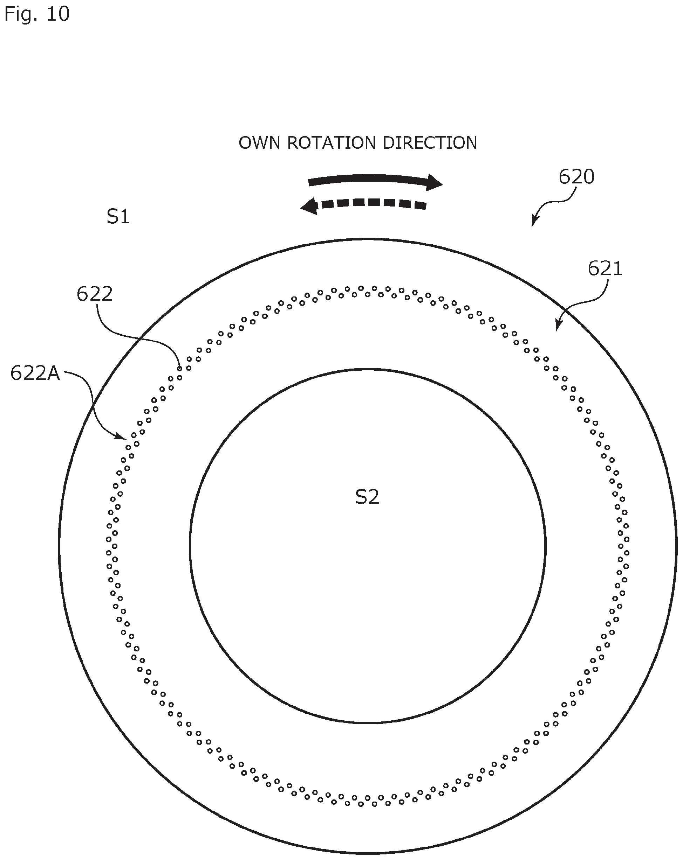

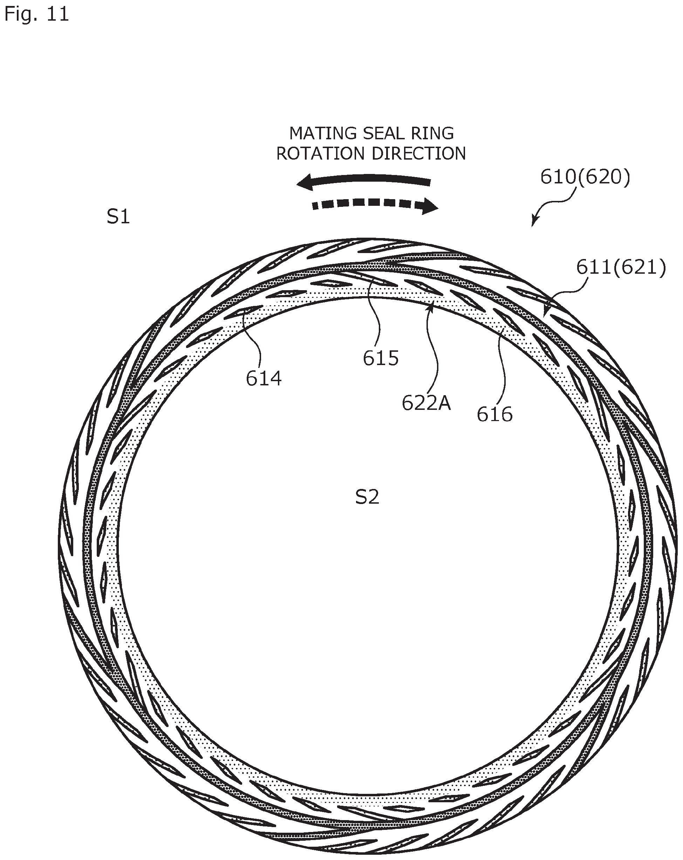

Next, a sliding component according to a sixth embodiment will be described with reference to FIGS. 10 and 11. Incidentally, the description of configurations that are the same as and overlap with the configurations of the first embodiment will be omitted.

As illustrated in FIG. 10, in a sliding component of the sixth embodiment, a band-shaped dimple group 622A consisting of a plurality of dimples 622 is annularly disposed on a sliding surface 621 of a rotating seal ring 620. The dimple group 622A is configured such that the plurality of dimples 622 are disposed in a staggered manner in the circumferential direction. The dimples 622 have a depth enough that the dynamic pressure generated during the relative rotation can be almost negligible.

As illustrated in FIG. 11, the dimple group 622A is disposed on a sliding surface 611 of a stationary seal ring 610 to overlap in the axial direction with a land 616 on the radially inner side, namely, on the leakage side, of first negative pressure generating grooves 614 and second negative pressure generating grooves 615. Incidentally, in FIG. 11, the region in which the dimple group 622A is formed is indicated by dots.

Accordingly, since the plurality of dimples 622 are provided on the radially inner side of the first negative pressure generating grooves 614 and the second negative pressure generating grooves 615 on the sliding surfaces 611, 621, the sealed fluid stored in the plurality of dimples 622 ensures the lubricity of the land 616 on the side of the inner space S2 of the first negative pressure generating grooves 614 and the second negative pressure generating grooves 615, which are susceptible to poor lubrication.

In addition, since the plurality of dimples 622 are disposed on the radially inner side of the first negative pressure generating grooves 614 and the second negative pressure generating grooves 615, in other words, are not disposed at positions overlapping with the first negative pressure generating grooves 614 and the second negative pressure generating grooves 615 in the circumferential direction, they are less likely to affect the functions of the first negative pressure generating grooves 614 and the second negative pressure generating grooves 615.

In addition, for example, a low-boiling-point fluid and a lubricating fluid may be mixed and sealed as the sealed fluid. In such a case, under normal conditions, the low-boiling-point fluid and the lubricating fluid flow into a space between the sliding surfaces 611, 621, and are returned toward the radially outer side by the first negative pressure generating grooves 614 and the second negative pressure generating grooves 615, whereby both sealing performance and lubricating performance can be achieved. When the space between the sliding surfaces 611, 621 or the vicinity thereof are at a high temperature, the low-boiling-point fluid evaporates, but the lubricating fluid remains between the sliding surfaces 611, 621 and is stored in the dimples 622, thereby ensuring lubricity. In addition, during the relative sliding, the low-boiling-point fluid and the lubricating fluid sequentially flow into the space between the sliding surfaces 611, 621, but the low-boiling-point fluid evaporates. Therefore, only the lubricating fluid is likely to remain on the radially inner side of the first negative pressure generating grooves 614 and the second negative pressure generating grooves 615, thereby ensuring lubricity.

### {Seventh embodiment}

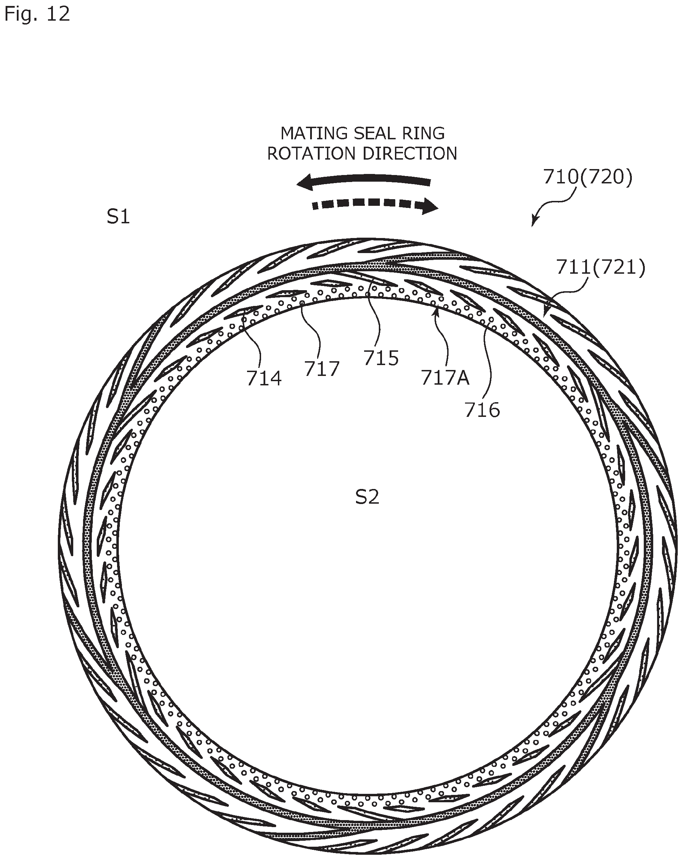

Next, a sliding component according to a seventh embodiment will be described with reference to FIG. 12. Incidentally, the description of configurations that are the same as and overlap with the configurations of the first embodiment will be omitted.

As illustrated in FIG. 12, in a sliding component of the seventh embodiment, a band-shaped dimple group 717A consisting of a plurality of dimples 717 is annularly disposed on the radially inner side, namely, on the leakage side, of first negative pressure generating grooves 714 and second negative pressure generating grooves 715 on a sliding surface 711 of a stationary seal ring 710. The dimple group 717A is configured such that the plurality of dimples 717 are disposed in a staggered manner in the circumferential direction. The dimples 717 have a depth enough that the dynamic pressure generated during the relative rotation can be almost negligible. Incidentally, a sliding surface 721 of a rotating seal ring 720 is a flat surface.

Accordingly, since the plurality of dimples 717 are provided between the sliding surfaces 711, 721 and on the radially inner side of the first negative pressure generating grooves 714 and the second negative pressure generating grooves 715, the sealed fluid stored in the plurality of dimples 717 ensures the lubricity of a land 716 on the side of the inner space S2 of the first negative pressure generating grooves 714 and the second negative pressure generating grooves 715, which are susceptible to poor lubrication.

In addition, since the plurality of dimples 717 are disposed on the radially inner side of the first negative pressure generating grooves 714 and the second negative pressure generating grooves 715, in other words, are not disposed at positions overlapping with the first negative pressure generating grooves 714 and the second negative pressure generating grooves 715 in the circumferential direction, they are less likely to affect the functions of the first negative pressure generating grooves 714 and the second negative pressure generating grooves 715.

In addition, for example, a low-boiling-point fluid and a lubricating fluid may be mixed and sealed as the sealed fluid. In such a case, under normal conditions, the low-boiling-point fluid and the lubricating fluid flow into a space between the sliding surfaces 711, 721, and are returned toward the radially outer side by the first negative pressure generating grooves 714 and the second negative pressure generating grooves 715, whereby both sealing performance and lubricating performance can be achieved. When the space between the sliding surfaces 711, 721 or the vicinity thereof are at a high temperature, the low-boiling-point fluid evaporates, but the lubricating fluid remains between the sliding surfaces 711, 721 and is stored in the dimples 717, thereby ensuring lubricity. In addition, during the relative sliding, the low-boiling-point fluid and the lubricating fluid sequentially flow into the space between the sliding surfaces 711, 721, but the low-boiling-point fluid evaporates. Therefore, only the lubricating fluid is likely to remain on the radially inner side of the first negative pressure generating grooves 714 and the second negative pressure generating grooves 715, thereby ensuring lubricity.

### {Eighth embodiment}

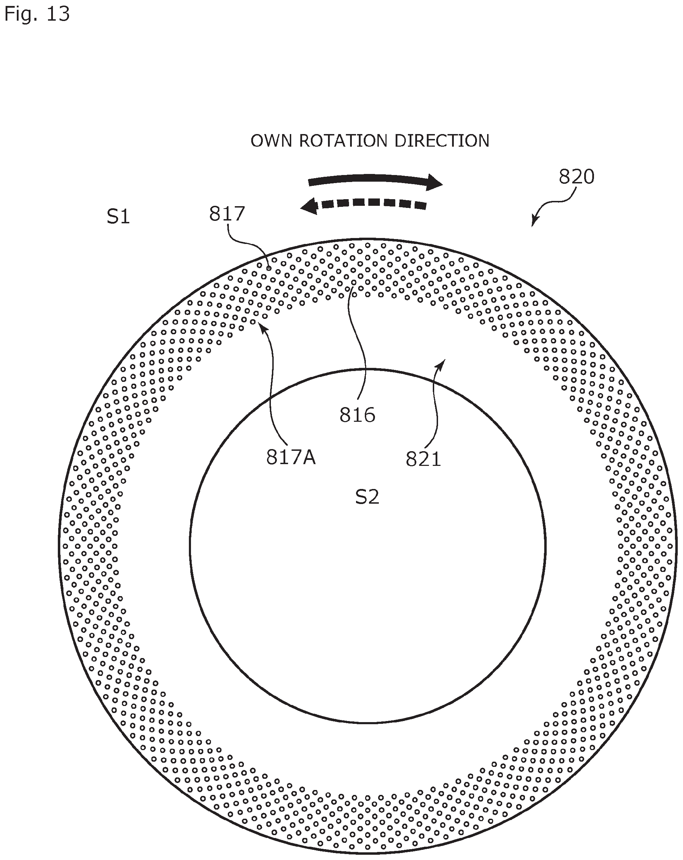

Next, a sliding component according to an eighth embodiment will be described with reference to FIG. 13. Incidentally, the description of configurations that are the same as and overlap with the configurations of the first embodiment will be omitted.

As illustrated in FIG. 13, in a sliding component according to the eight embodiment, a band-shaped dimple group 817A is annularly disposed in a sliding region of a sliding surface 821 of a rotating seal ring 820 that is opposed to the entire sliding surface 11 of the stationary seal ring 10 (see FIG. 2). The dimple group 817A is configured such that a plurality of dimples 817 are disposed in a staggered manner in the circumferential direction.

The plurality of dimples 817 overlap in the axial direction at least partially with the storage groove 12, the dynamic pressure generating grooves 13, the first negative pressure generating grooves 14, and the second negative pressure generating grooves 15 (see FIG. 2) provided in the sliding surface 11 of the stationary seal ring 10.

Accordingly, since the plurality of dimples 817 are provided over substantially the entire sliding region between the sliding surfaces 11, 821, the sealed fluid stored in the plurality of dimples 817 ensures the lubricity of a land 816 on the side of the inner space S2 of the first negative pressure generating grooves 14 and the second negative pressure generating grooves 15, which are susceptible to poor lubrication.

Incidentally, the dimples 817 are preferably formed to have a depth enough that does not affect the dynamic pressure generating capability of the dynamic pressure generating grooves 13, the first negative pressure generating grooves 14, and the second negative pressure generating grooves 15, for example, a depth of not more than one-tenth of those of the dynamic pressure generating grooves 13, the first negative pressure generating grooves 14, and the second negative pressure generating grooves 15.

In addition, the dimples may also be provided in a portion of the sliding surface 11 of the stationary seal ring 10 other than the storage groove 12, the dynamic pressure generating grooves 13, the first negative pressure generating grooves 14, and the second negative pressure generating grooves 15.

The embodiments of the present invention have been described above with reference to the drawings; however, the specific configurations are not limited to the embodiments, and changes or additions that are made without departing from the scope of the present invention are included in the present invention.

For example, in the first to eighth embodiments described above, a mechanical seal has been described as an example of the sliding component; however, the present invention may be also applied to other mechanical seals such as those for general industrial machinery, automobiles, and water pumps. In addition, the present invention is not limited to mechanical seals, and may also be applied to sliding components other than mechanical seals, such as plain bearings.

In addition, in the first to eighth embodiments described above, a mode in which the first negative pressure generating grooves and the second negative pressure generating grooves are spiral grooves has been provided as an example; however, the present invention is not limited thereto, and they may be Rayleigh steps, dimples, or the like.

In addition, in the first to eighth embodiments described above, a mode in which on the sliding surface, the total area of the second negative pressure generating grooves is smaller than that of the first negative pressure generating grooves, and the total volume of the second negative pressure generating grooves is smaller than that of the first negative pressure generating grooves has been provided as an example; however, the present invention is not limited thereto. For example, as long as on the sliding surface, the total area of the second negative pressure generating grooves is smaller than that of the first negative pressure generating grooves, the total volume of the second negative pressure generating grooves may be greater than that of the first negative pressure generating grooves. In addition, as long as the total volume of the second negative pressure generating grooves is smaller than that of the first negative pressure generating grooves, on the sliding surface, the total area of the second negative pressure generating grooves may be greater than that of the first negative pressure generating grooves.

In addition, in the first to eighth embodiments described above, a mode in which the storage groove has an annular groove portion has been provided as an example; however, instead of the annular groove portion, a plurality of arc-shaped grooves or grooves having a C-shape when viewed in the axial direction may be applicable as long as the grooves are deeper than the first negative pressure generating grooves and the second negative pressure generating grooves.

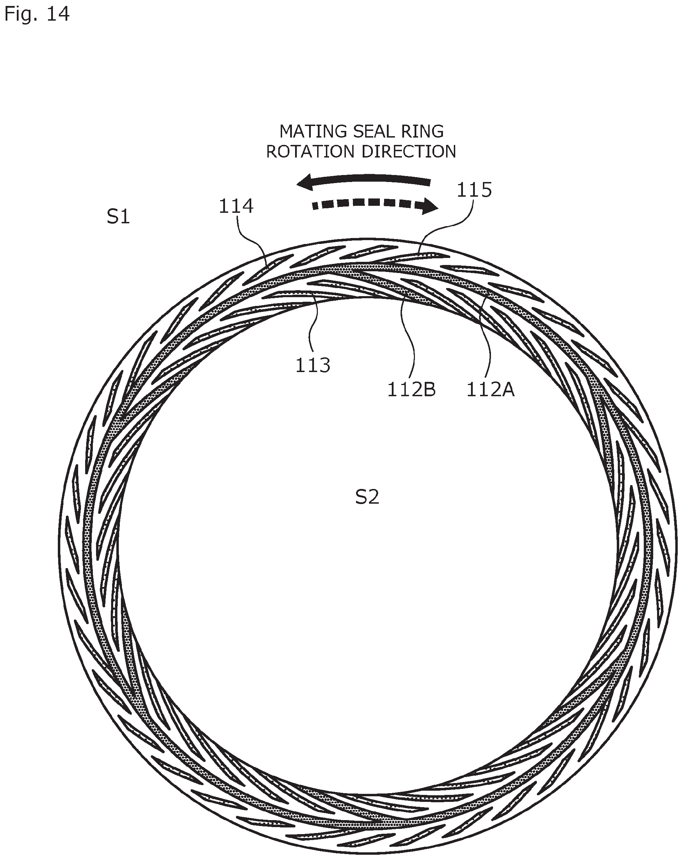

In addition, in the first to eighth embodiments described above, a mode in which the sealed fluid space is the outer space S1 and the leakage space is the inner space S2 has been provided as an example; however, as illustrated in FIG. 14, the sealed fluid space may be the inner space S2 and the leakage space may be the outer space S1. In this case, inlet/outlet groove portions 112B and dynamic pressure generating grooves 113 may be disposed on the radially inner side of annular groove portion 112A, and first negative pressure generating grooves 114 and second negative pressure generating grooves 115 may be disposed on the radially outer side of the annular groove portion 112A.

In addition, the sealed fluid side has been described as the high-pressure side and the leakage side has been described as the low-pressure side; however, the sealed fluid side and the leakage side may be at substantially the same pressure.

In addition, in the first to eighth embodiments described above, the sealed fluid has been described as high-pressure lubricating oil; however, the present invention is not limited thereto, and the sealed fluid may be a gas or a low-pressure liquid, or may be a mixture of liquid and gas in the form of a mist. In addition, for example, two or more types of fluids, such as a low-boiling-point fluid and a lubricating fluid, may be mixed.

In addition, in the first to eighth embodiments described above, the fluid on the leakage side has been described as an atmosphere, which is a low-pressure gas; however, the present invention is not limited thereto, and the fluid may be a liquid or a high-pressure gas, or may be a mixture of liquid and gas in the form of a mist. In addition, for example, two or more types of fluids, such as a low-boiling-point fluid and a lubricating fluid, may be mixed.

In addition, in the sixth to eighth embodiments described above, a mode in which the dimples are disposed in a staggered manner has been provided as an example; however, the arrangement pattern of the dimples may be freely changed. In addition, the shape, depth, and the like of the dimples may also be freely changed. In addition, the dimples may be provided in each of the sliding surface of the stationary seal ring and the sliding surface of the rotating seal ring.

In addition, in the sixth to eighth embodiments described above, a mode in which a plurality of dimples are provided has been provided as an example; however, for example, a single annular dimple or a single arc-shaped dimple may be provided on the leakage space side of the first negative pressure generating grooves and the second negative pressure generating grooves. The number of dimples may be freely changed.

In addition, in the seventh embodiment described above, a mode in which the dimples are provided on the leakage space side of the first negative pressure generating grooves and the second negative pressure generating grooves on the sliding surface of the stationary seal ring has been provided as an example; however, the dimples may be provided at a portion of the sliding surface of the stationary seal ring other than the storage groove, the dynamic pressure generating grooves, the first negative pressure generating grooves, and the second negative pressure generating grooves, for example, at a portion between the storage groove and the dynamic pressure generating grooves or a portion between the storage groove and the first negative pressure generating grooves.

### {REFERENCE SIGNS LIST}

- 1: Rotating shaft
- 4: Housing
- 10: Stationary seal ring
- 11: Sliding surface (one sliding surface)
- 12: Storage groove
- 12A: Annular groove portion
- 12B: Inlet/outlet groove portion
- 13: Dynamic pressure generating groove
- 14: First negative pressure generating groove
- 14a: Radially outer end (sealed fluid space-side end)
- 14b: Radially inner end (leakage space-side end)
- 15: Second negative pressure generating groove
- 15a: Radially outer end (sealed fluid space-side end)
- 15b: Radially inner end (leakage space-side end)
- 16: Land
- 20: Rotating seal ring
- 21: Sliding surface (other sliding surface)
- AR1: Total area
- AR2: Total area
- S1: Outer space (sealed fluid space)
- S2: Inner space (leakage space)
- VL1: Total volume
- VL2: Total volume

## Claims

1. A sliding component that is disposed between a housing and a shaft extending through the housing and partitions a sealed fluid space from a leakage space, the sliding component comprising a pair of sliding surfaces, wherein
one of the sliding surfaces is provide with:
at least one dynamic pressure generating groove communicating with the sealed fluid space;
a storage groove disposed on a leakage space side of the dynamic pressure generating grooves and extending in a circumferential direction,
at least one first negative pressure generating groove disposed on the leakage space side of the storage groove and not communicating with the storage groove; and
at least one second negative pressure generating groove disposed on the leakage space side of the storage groove and communicating with the storage groove.

2. The sliding component according to claim 1, wherein
a total volume of the second negative pressure generating grooves is smaller than a total volume of the first negative pressure generating grooves.

3. The sliding component according to claim 1, wherein
a plurality of the second negative pressure generating grooves are arranged in a circumferential direction, and
a plurality of the first negative pressure generating grooves are disposed between adjacent two of the second negative pressure generating grooves.

4. The sliding component according to claim 1, wherein
the first negative pressure generating groove and the second negative pressure generating groove extend in a radial direction, and
one end of the second negative pressure generating groove on the leakage space side is disposed on a storage groove side of one end of the first negative pressure generating groove on the leakage space side.

5. The sliding component according to claim 4, wherein
the first negative pressure generating groove is provided spaced apart from the second negative pressure generating groove on an extension line of the second negative pressure generating groove on the leakage space side.

6. The sliding component according to claim 4, wherein
the second negative pressure generating groove overlaps in the circumferential direction with remaining one end of the first negative pressure generating groove on a sealed fluid space side.

7. The sliding component according to claim 1, further comprising a flow inhibiting mechanism configured to provide resistance to a sealed fluid flowing toward the leakage space side through the second negative pressure generating groove.

8. The sliding component according to claim 7, wherein
the flow inhibiting mechanism is a projection extending inclined toward a communication portion between the second negative pressure generating groove and the storage groove.

9. The sliding component according to claim 7, wherein
the flow inhibiting mechanism is a wall rising in a depth direction against a flow of the sealed fluid toward the leakage space side.

10. The sliding component according to claim 1, wherein
dimples are provided on the one of the sliding surfaces at least on the leakage space side of the first negative pressure generating groove and the second negative pressure generating groove.

11. The sliding component according to claim 1, wherein
dimples are provided on remaining one of the sliding surfaces opposed to the one of the sliding surfaces, at least on the leakage space side of the first negative pressure generating groove and the second negative pressure generating groove.
